# EUROPEAN PATENT APPLICATION

(11) **EP 1 662 136 A2**
(43) Date of publication of application: **31.05.2006**
(21) Application number: 05257250.0
(22) Date of filing: 24.11.2005
(51) Int. Cl.: F03B 13/12

(54) **Runner for francis type hydraulic turbine**

(30) Priority: 30.11.2004 CA 2488714
(71) Applicant: General Electric Canada, Mississauga ON L5N 5P9 (CA)
(72) Inventor: Coulson, Stuart Thomas, Beaconsfield Quebec H9W 2T9 (CA); Do, Hung, Brossard, Quebec J4X 2L8 (CA)
(74) Representative: Goode, Ian Roy

(57) **Abstract**

There is disclosed a runner (10) for a Francis-type hydraulic turbine where each runner blade (13) has a outlet edge (16) comprising a deflected edge portion (110). The deflected edge portion (110) is located adjacent to the junction or attachment point (B) of the outlet edge (16) to the band (11) of the runner (10) to define a stress reducing tip extension portion (130) of the blade (13) adjacent the band (11). This tip extension portion (130) reduces stress concentration adjacent where the outlet edge (16) joins the runner band (11).

## Description

The present invention relates to hydraulic machines and in particular to improvements in runners for Francis-type machines.

Conventional Francis-type runners are composed of a crown with a concentric band or ring and an array of blades extending between and interconnecting the crown with the ring. The runner is rotated about the axis of the crown by the action of water passing through a plurality of flow paths formed between each pair of adjacent blades in the array of blades. Each of the blades has a flow dividing edge which defines the line of demarkation between a suction surface leading in the direction of rotation and a trailing pressure surface trailing in the direction of rotation. This edge, at the inlet of the blades, is normally oriented to slope from the band toward the crown to advance in the direction of rotation of the runner.

More recently, WO 98/05863 published February 12, 1998 to Billdal et al discloses a runner for a Francis-type hydraulic turbine where each blade has an inlet edge and an outlet edge. The blade is characterized, in the direction of turbine rotation, by the junction point of each blade inlet edge at the band being located forwardly of the inlet edge attachment point for that blade at the crown, and the junction point of each blade outlet edge at the crown being located forwardly of the outlet edge attachment point for that blade at the band. Because of the twisting aspect between the inlet edge and the outlet edge of the blade, this blade is commonly referred to as the "X-blade".

The blades of the aforementioned Francis-type runners are subject to static and dynamic stress concentrations having a focal point at the junction of the runner band and the blade outlet edge. This phenomenon may result in blade erosion and cracking adjacent the band. Further this phenomenon is more pronounced in the "X-blade" runner. In the past, to reduce stress concentration points in the runner blade, the blade was either thickened adjacent the junction with the band, or weld fillets joining the blade to the band were increased in size. However, thickening of the blade adjacent the junction with the band must be substantial in size to relieve the stress concentration and this results in a more costly solution. Increasing the weld fillet size also adds cost to the manufacture of the runner and can cause problems with distortion of the runner due to the increase in weld material deposited. Both these traditional solutions typically add uneven surface contours to the blade that result in negative impacts on hydraulic performance in both efficiency and cavitation behavior of the runner.

The present invention relates to a runner for a Francis-type hydraulic turbine where each runner blade has a outlet edge comprising a deflected edge portion. The deflected edge portion is located adjacent to the junction or attachment point of the outlet edge to the band of the runner to define a stress reducing tip extension portion for the blade adjacent the band.

The tip extension portion reduces both static and dynamic stress concentrations by having the shape of the blade at the outlet edge adjacent the band as a tip extension portion. This tip extension portion for the blade is less costly to manufacture than trying to build the material at the corner or thicken weld fillets since this tip extension portion adds minimal blade volume and results in significant stress reduction. Since the tip extension portion is built into the blade at the hydraulic design stage the weld fillet size remains small, there is no negative impact on hydraulic performance or cavitation behavior. It is further envisaged that existing runner blades can have their shape altered at the junction portion between the blade outlet edge portion and the band to provide the tip extension portion provided the outlet edge is continuous between the crown and the band.

In accordance with an embodiment there is provided a runner for a Francis-type hydraulic turbine, comprising a band, a crown and a number of blades having a curved shape and being attached to the band and the crown. Each blade comprises an inlet flow dividing edge adapted to face upstream in the turbine and an outlet edge adapted to face downstream from the turbine towards a draft tube. The outlet edge comprises a continuous edge extending between the crown and the band. The outlet edge comprises a deflected edge portion located adjacent the band that meets the band at a first junction point. The deflected edge portion defines a stress reducing tip extension portion of the blade adjacent the band. The first junction point is downstream in the direction of rotation of the runner from an expected junction point of the band and the outlet edge without the deflected edge portion.

In one embodiment, the deflected edge portion meets the band at an acute angle when viewed looking into the runner from its exit opening.

In one embodiment the deflected edge portion has a radial displacement from the band that is at least 3% of an exit diameter of the band.

For a better understanding of the nature of the present invention reference may be had by way of example to the accompanying diagrammatic drawings in which:
FIG. 1 is a perspective view of a Francis-type runner with a blade configuration of traditional type,
FIG. 2 is a somewhat different simplified perspective view showing an example of an embodiment of a runner according to the present invention,
FIG. 3 is an elevation view of the runner of FIG. 2,
FIG. 4 shows the runner in FIG. 3 looking into the runner from its exit opening,
FIG. 5 shows a schematic axial section (meridian section) of a single blade,
FIG. 6 shows a corresponding blade as seen in axial direction of the suction side of a blade for a runner according to the invention,
FIG. 7 shows a plan view from below of a single blade, and
FIGs. 8a, 8b and 8c are views of one blade looking into the exit opening of the runner showing the curvature of the defected edge portion of the blade adjacent the band.

The present invention relates to hydraulic machines and in particular to improvements in runners for Francis-type machines.

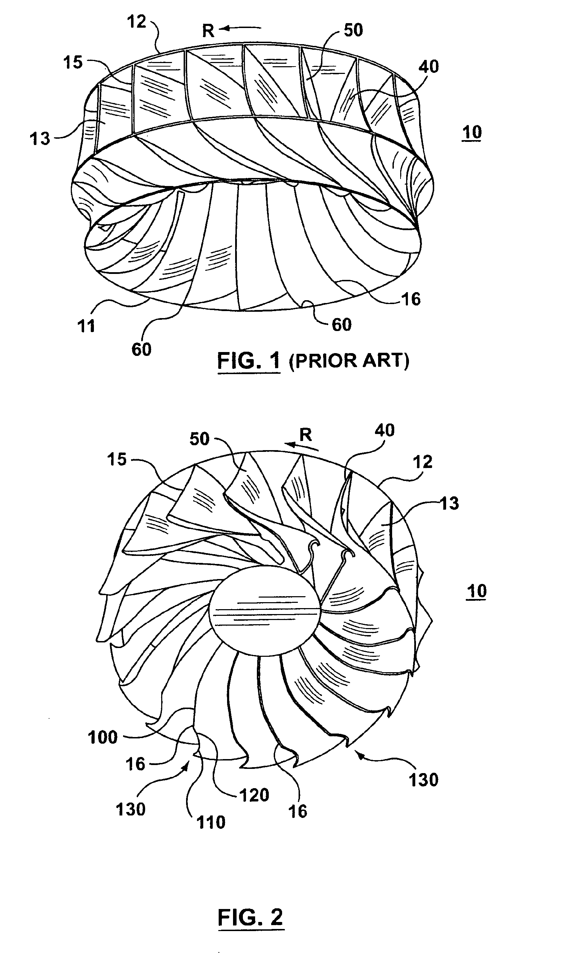

FIG. 1 schematically shows a known prior art runner 10 having a band or ring 11 and a hub or crown 12 to which the blades 13 are attached in a usual manner. The runner 10 rotates in the direction of arrow R such that each blade 13 defines a suction surface 40 leading in the direction of rotation and a pressure surface 50 trailing in the direction of rotation. It should be noted that in the blade configuration of FIG. 1, each of the blades 13 has a corner 60 adjacent where the outlet edge 16 of the blade 13 is attached or joined to the band 11. It is this corner 60, of about 90 degrees in Fig. 1, that blade 13 is subject to the static and dynamic stress concentrations mentioned above.

Referring to Figs. 2 to 4, the runner 10, according to the invention is also shown with a crown 12. For clarity the actual surrounding ring or band has been omitted in Fig. 2. Here the inlet flow dividing edge 15 of the blades 13 have an opposite leaning compared to the design of FIG. 1, when the indicated rotational direction R in FIG. 2 is taken into account. The blades 13 shown in Fig. 2 are of the "X-blade" configuration. In this configuration, the blade outlet edge 16 extends at an inclination forwardly as seen from the crown 12 towards the band 11. While the detailed description so far has related to blade 13 having an "X-blade" configuration, it should be understood that the invention also has utility in blades of other configurations, such as, for example the runner shown in Fig. 1.

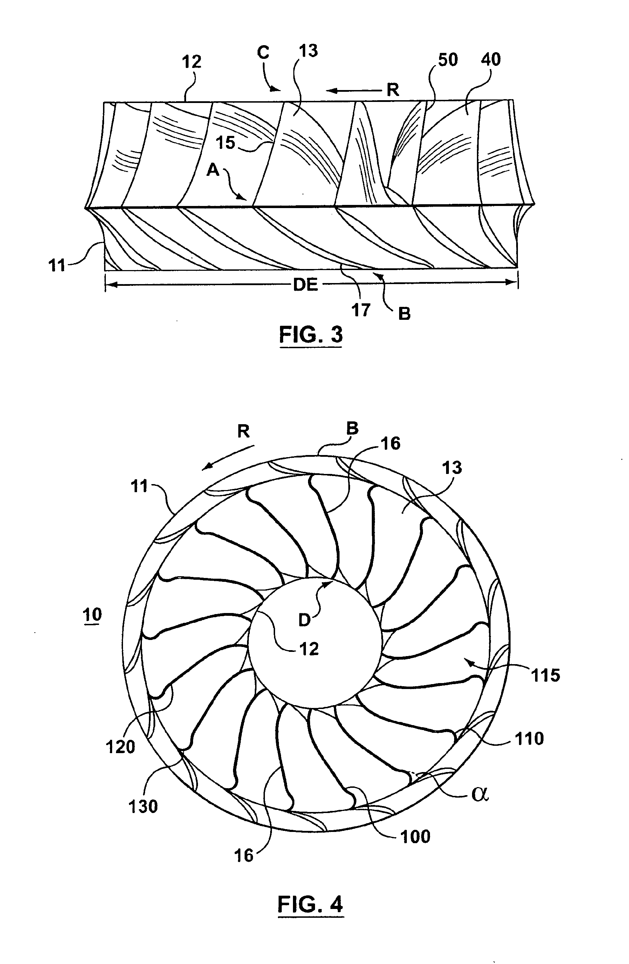

In FIG. 3, and partly in FIG. 4, arrows have been inserted for indicating points or positions in the runner configuration, that can be considered to characterize in a practical manner the particular blade shape being here described. There points are:
A--The junction or attachment points of the blade inlet flow dividing edge 15, at the band 11,
B--the attachment points of the blade outlet edge 16, at the band 11,
C--the attachment point of the inlet edge 15 at the crown 12, and
D--the attachment point of the outlet edge 16 at the crown 12 (point D is not shown in FIG. 3).

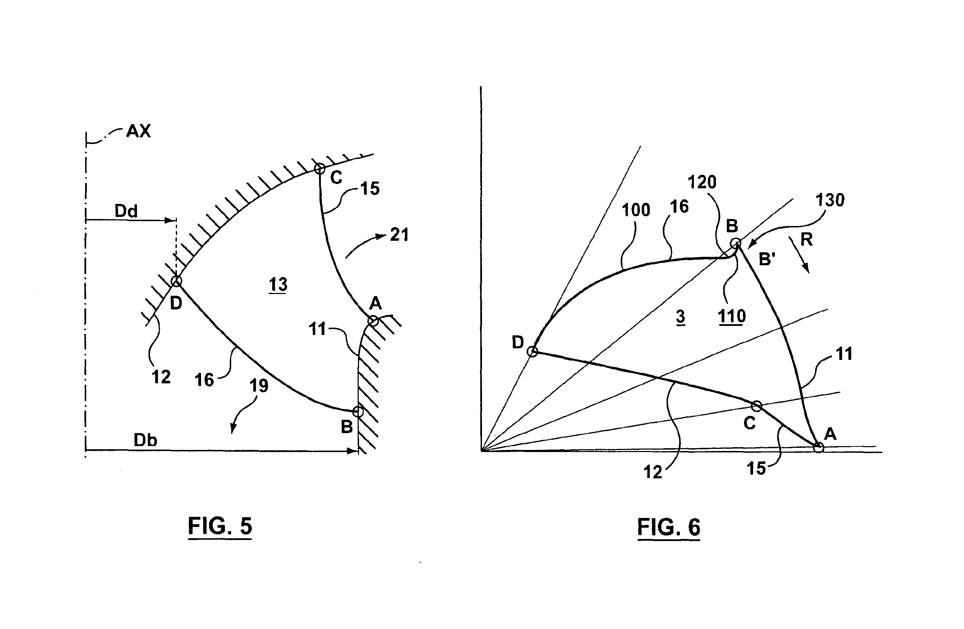

The schematic axial section of FIG. 5 gives a more complete and clear illustration of how the above mentioned points A, B, C, and D are defined in the arrangement of band 11, crown 12 and blade 13. Each of the four points in FIG. 5 (and in FIG. 6) are indicated with a small circle. FIG. 5 also schematically shows the axis of rotation Ax of the runner, wherein also two dimensions are indicated, i.e. the diameter Dd with respect to point D and the diameter Db with respect to point B. In the embodiment shown the axis Ax extends vertically. In Fig 5, the orientation of the blade 13 in the runner 10 is shown relative to the upstream portion 21 of the turbine and the draft tube 19 located downstream of the runner 10. Here the inlet flow dividing edge 15 faces upstream 21 of the turbine and the outlet edge 16 faces downstream of the turbine towards the draft tube 19.

FIGS. 3, 4 and 5, show how the four points A, B, C and D mentioned above are located angularly in relation to the axis of rotation. This axis is represented by origin in the diagram of FIG. 6. Thus FIG. 6 shows the blade 3 as seen in an axial direction of FIG. 5. The rotational direction is again indicated in FIG. 6 with the arrow R.

Point A is located forwardly of point C as seen in the rotational direction R, and point B leads point D as seen in the rotational direction R. This is the configuration that influences the particular and controlled twisted shape of the "X-blade" configuration of blade 13. The junction or attachment point A of the blade inlet flow dividing edge 15 at the band 11 is located forwardly of the inlet edge junction or attachment point C at the crown 12. Also, the attachment point B of the blade outlet edge 16 at the band 11 is located forwardly of the outlet edge attachment point D at the crown 12, as seen in the rotational direction R of the runner.

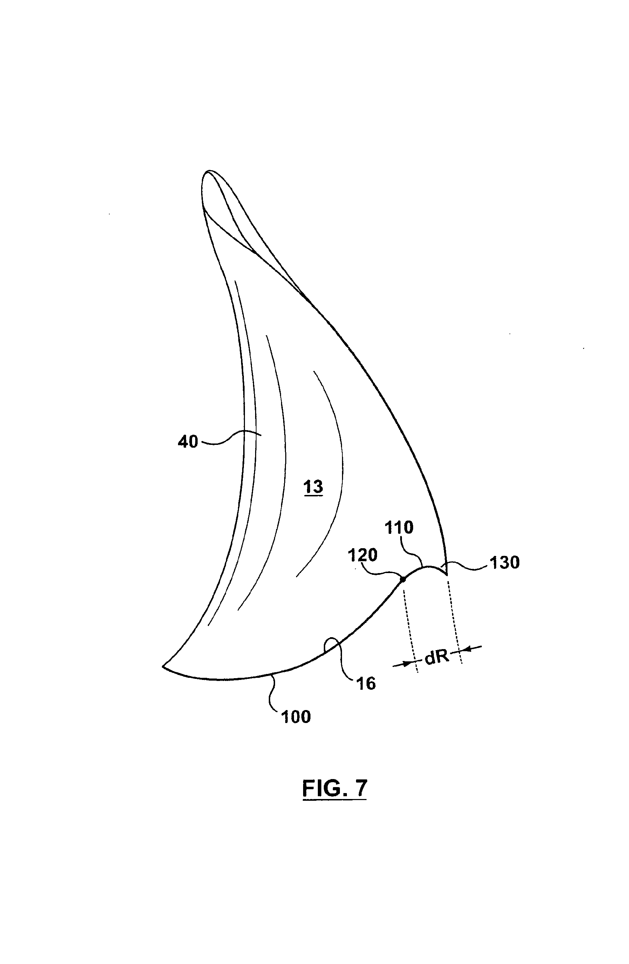

The present invention, as seen in Figs 2, 4, 6 and 7, relates to the shape of the outlet edge 16 of the blade 13 adjacent the band 11 at the runner outlet to reduce both static and dynamic stress concentrations. The blade 13 comprises a pointed tip extension portion 130 of a pointed shape adjacent the band 11. In the embodiment shown, the tip extension portion 130 is achieved by the outlet edge 16 comprising a non-deflected edge portion 100 that has gentle curving concave contour running into a convex deflected edge portion 110. The convex deflected edge portion 110 is located adjacent the junction or attachment point B of the outlet edge 16 to the band 11 and defines the tip extension portion 130. In Fig. 5, the tip extension portion 130 forms an acute angle α where the deflected edge portion 110 meets the band 11 viewed looking into the runner 10 from its exit opening 115. The convex deflected edge portion 110 has a radial displacement dR (Fig 7) from the band 11 that is at least 3% of an exit diameter DE (Fig. 3) of the band 11. The non-deflected edge portion 100 and the convex defected edge portion 110 meet at a deflection point 120. The deflection point 120 is displaced by the radial displacement dR from the band 11. The convex deflected edge portion 110 results in the reduction of the angle made between the outlet edge 16 of the blade 13 and the band 11 which otherwise would be an obtuse angle in the "X-blade" design when viewed looking into the runner exit opening.

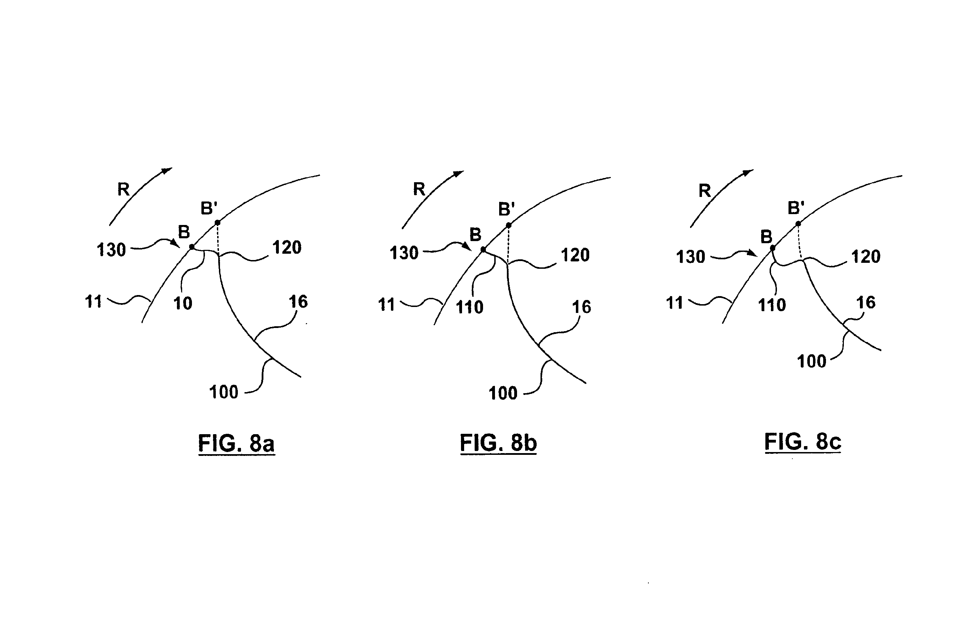

Referring to Figs. 8a to 8c there are shown various length shapes for the deflected blade portion 110. Fig. 8c shows the outlet edge 16 having a deflection point 120 adjacent the band 11 where the deflected edge portion 110 has a convex length as noted above. In Fig. 8b, an alternative embodiment for the deflected edge portion 110 shown where the deflected edge portion 110 is a straight length. Fig. 8c shows a further alternative embodiment where the deflected edge portion 110 has a concave/convex or serpentine length. In each of the embodiments of Figs. 8a through 8c, the non-defected edge portion 100 of the outlet blade 16 has a smooth or gradual contour that bends gently at the deflection point 120 without a sharp corner or edge into the continuing deflected edge portion 110. Hence the outlet edge 16 has a continuous edge between the crown 12 and the band 11.

Referring to Figs. 6 and 8a through 8c, it is seen that the tip extension portion 130 results in the first junction point B being located downstream in the direction of rotation R of the runner 10 from an expected junction point B' of the band 11 and the outlet edge 16 where the contour of the non-deflected edge portion 100 would continue as shown in dotted line or alternatively, if the outlet edge 16 did not have the deflected edge portion 110.

## Claims

1. A runner for a Francis-type hydraulic turbine, comprising a band (11), a crown (12) and a number of blades (13) having a curved shape and being attached to the band (11) and the crown (12), each blade (13) comprising an inlet flow dividing edge (15) adapted to face upstream in the turbine and an outlet edge (16) adapted to face downstream from the turbine towards a draft tube (19), the outlet edge (16) comprising a continuous edge extending between the crown (12) and the band (11) and the outlet edge comprising a deflected edge portion (110) located adjacent the band (11) that meets the band (11) at a first junction point (B), the deflected edge portion (110) defining a stress reducing tip extension portion (130) of the blade (13) adjacent the band (11), and the first junction point (B) being downstream in the direction of rotation (R) of the runner (10) from an expected junction point (B') of the band (11) and the outlet edge (16) without the deflected edge portion (110).

2. The runner according to claims 1 wherein a second junction point (A) of the blade inlet edge (15) at the band (11) is located forwardly of an inlet edge junction point (C) at the crown, and that the first junction point (B) of the blade outlet edge (16) at the band (11), is located forwardly of an outlet edge attachment point (D) at the crown (12), as seen in the rotational direction (R) of the runner.

3. The runner according to claims 1 and 2 wherein the tip extension portion (130) of the blade (13) is integrally formed therewith.

4. The runner according to claims 1 to 3 wherein the deflected edge portion (110) has a length shape selected from the group of straight, convex and serpentine.

5. The runner according to claims 1 to 4 wherein the tip extension portion (130) forms an acute angle (α) where the deflected edge portion (110) meets the band (11) when viewed looking into the runner from its exit opening (115).

6. The runner according to claims 1 to 5 wherein the defected edge portion (110) has a radial displacement (dR) from the band (11) that is at least 3% of an exit diameter (DE) for the band (11).

7. The runner according to claim 6 wherein the outlet edge of the blade comprises a curving non-deflected edge portion (100) and the deflected edge portion (110) continues from the curving non-deflected edge portion (100) at a deflection point (120).

8. The runner according to claim 7 wherein the deflection point (120) is displaced by the radial displacement (dR) from the band (11).
